# EUROPEAN PATENT APPLICATION

(11) **EP 4 654 376 A1**
(43) Date of publication of application: **26.11.2025**
(21) Application number: 23917654.8
(22) Date of filing: 29.11.2023
(51) Int. Cl.: H01M 50/593, H01M 10/48, H01M 50/282, H01M 50/586

(54) **BATTERY MODULE**

(30) Priority: 17.01.2023 JP 2023004951
(71) Applicant: AESC Japan Ltd., Yokohama-Shi, Kanagawa 220-0012 (JP)
(72) Inventor: IZAWA Takami, Zama-shi, Kanagawa 252-0012 (JP); FU Yongliang, Zama-shi, Kanagawa 252-0012 (JP); SHAO Yongzheng, Zama-shi, Kanagawa 252-0012 (JP); MONNO Dai, Zama-shi, Kanagawa 252-0012 (JP)
(74) Representative: Mathys & Squire
(86) International application number: PCT/JP2023/042764
(87) International publication number: WO 2024/154442

(57) **Abstract**

A battery module (1A) includes a battery cell (100), a positive electrode bus bar (230A) electrically connected to the battery cell (100), a housing body (30A) exposing at least a portion of the positive electrode bus bar (230A) and housing the battery cell (100), and an insulator (400A) covering at least a portion of the housing body (30A) around the at least a portion of the positive electrode bus bar (230A).

## Description

### TECHNICAL FIELD

The present invention relates to a battery module.

### BACKGROUND ART

In recent years, various battery modules have been developed. For example, as described in Patent Document 1, the battery module includes a plurality of battery cells stacked in a predetermined direction and a housing body housing the plurality of battery cells. The housing body described in Patent Document 1 has a cooling plate made of a material containing aluminum, a front cover made of a material containing steel, a rear cover made of a material containing steel, a left side cover made of a material containing steel, a right side cover made of a material containing steel, and an upper surface plate made of a material containing steel.

### RELATED DOCUMENT

### PATENT DOCUMENT

Patent Document 1: PCT Japanese Translation Patent Publication No. 2018-518032

### SUMMARY OF THE INVENTION

### TECHNICAL PROBLEM

The battery module may include an external terminal such as a bus bar for electrically connecting to an external device such as an external battery module through a predetermined connection terminal. In this example, one end of the connection terminal is electrically connected to the external terminal. At least a portion of the external terminal is exposed from the housing body. As described in Patent Document 1, for example, when the housing body consists of a conductor such as a metal, however, it may be difficult to suppress a short circuit between the housing body and the connection terminal due to the contact between the housing body and the connection terminal.

An example of the object of the present invention is to ensure electrical insulation between a housing body and a connection terminal that is electrically connected to an external terminal. Other objects of the present invention will become apparent from the description of the present specification.

### SOLUTION TO PROBLEM

An aspect of the present invention is as follows.
[1] A battery module including
   a battery cell,
   an external terminal electrically connected to the battery cell,
   a housing body exposing at least a portion of the external terminal and housing the battery cell, and
   an insulator covering at least a portion of the housing body around the at least a portion of the external terminal.
[2] The battery module according to [1],
   in which the insulator covers at least a portion of an edge of the housing body around the at least a portion of the external terminal.
[3] The battery module according to [1],
   in which the housing body includes a folded portion folded together with the insulator around the at least a portion of the external terminal.
[4] A battery module including
   a battery cell,
   an external terminal electrically connected to the battery cell,
   a housing body housing the battery cell, and
   an insulator separating the external terminal and the housing body from each other.
[5] The battery module according to [4],
   in which the insulator protrudes from between the external terminal and the housing body.
[6] The battery module according to [4] or [5], further including
   a voltage detection portion electrically connected to the battery cell, and
   a holding body holding the voltage detection portion,
   in which the insulator is at least a portion of the holding body.

### ADVANTAGEOUS EFFECTS OF INVENTION

According to the aspect described above of the present invention, the electrical insulation between the housing body and the connection terminal that is electrically connected to the external terminal can be ensured.

### BRIEF DESCRIPTION OF THE DRAWINGS

[FIG. 1] A perspective view of a battery module according to Embodiment.
[FIG. 2] An exploded perspective view of a battery module according to Embodiment 1.
[FIG. 3] A schematic cross-sectional view taken along line A-A of FIG. 1.
[FIG. 4] A diagram showing a first variant of FIG. 3.
[FIG. 5] A cross-sectional view of an upper plate and an insulator at portions of the front end portion of the upper plate and the front end portion of the insulator not folded.
[FIG. 6] A diagram showing a second variant of FIG. 3.
[FIG. 7] A perspective view of a battery module according to Embodiment 2.
[FIG. 8] An enlarged perspective view of the front portion of the battery module according to the Embodiment 2 with the housing body removed.

### DESCRIPTION OF EMBODIMENTS

Hereinafter, embodiments and variants of the present invention will be described with reference to the accompanying drawings. In all drawings, the same constituent elements are denoted by the same reference signs, and detailed description thereof will not be repeated.

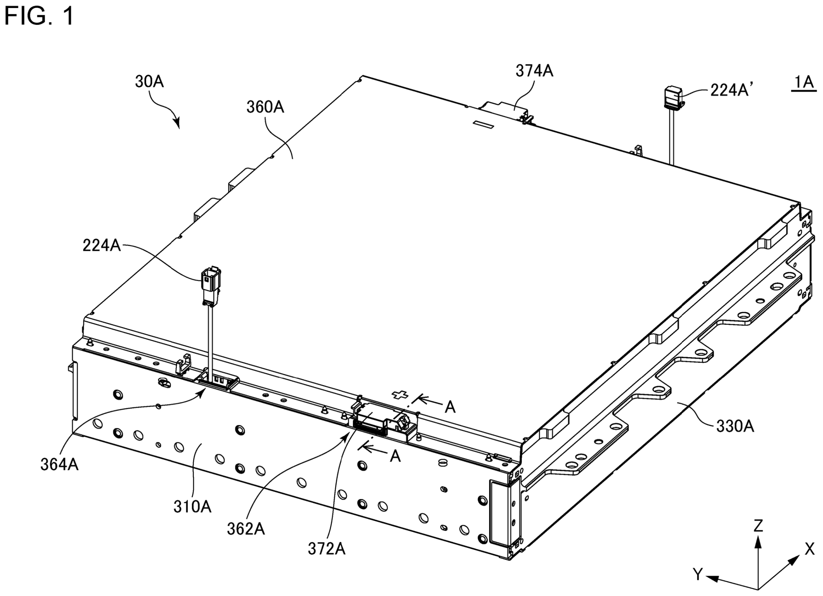

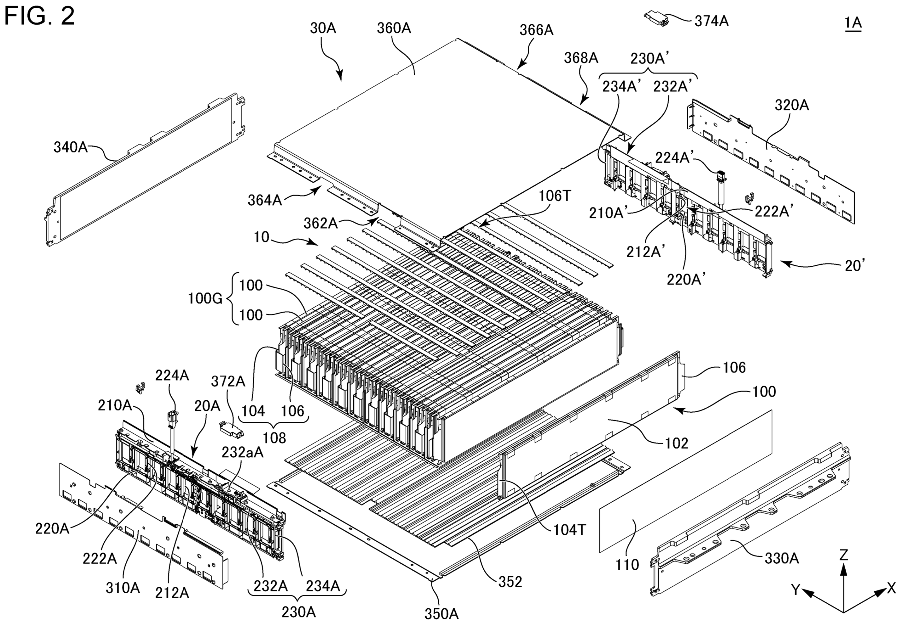

FIG. 1 is a perspective view of a battery module 1A according to Embodiment. FIG. 2 is an exploded perspective view of a battery module 1A according to Embodiment 1.

In each drawing, the arrows indicating the X direction, the Y direction, and the Z direction are shown for description. Hereinafter, unless otherwise specified, the distal end side of an arrow indicating the X direction is referred to as a rear side of the battery module 1A, and the proximal end side of the arrow indicating the X direction is referred to as a front side of the battery module 1A. The Y direction is orthogonal to the X direction. The Y direction is a left-right direction of the battery module 1A. Hereinafter, unless otherwise specified, the distal end side of an arrow indicating the Y direction is referred to as a left side of the battery module 1A, and the proximal end side of the arrow indicating the Y direction is referred to as a right side of the battery module 1A. The Z direction is orthogonal to both the X direction and the Y direction. The Z direction is an up-down direction of the battery module 1A. Hereinafter, unless otherwise specified, the distal end side of an arrow indicating the Z direction is referred to as an upper side of the battery module 1A, and the proximal end side of the arrow indicating the Z direction is referred to as a lower side of the battery module 1A. Hereinafter, as necessary, a direction perpendicular to the X direction will be referred to as a YZ plane direction, a direction perpendicular to the Y direction will be referred to as a ZX plane direction, and a direction perpendicular to the Z direction will be referred to as a XY plane direction. The relationship between each of the X direction, the Y direction, and the Z direction and each of the front-rear direction, the left-right direction, and the up-down direction of the battery module 1A is not limited to the example described above.

A structure of a battery module 1A will be described with reference to FIGS. 1 and 2.

The battery module 1A includes a cell stacked body 10, a front voltage detection device 20A, a rear voltage detection device 20A', and a housing body 30A.

As shown in FIG. 2, the cell stacked body 10 has a plurality of battery cells 100 and a plurality of compression pads 110. The plurality of battery cells 100 and the plurality of compression pads 110 are alternately arranged in the Y direction. The compression pads 110 are disposed on opposite sides of each battery cell 100 in the Y direction. The plurality of battery cells 100 and the plurality of compression pads 110 are compressed in the Y direction by a right plate 330A and a left plate 340A, which will be described later. As a result, the deviation of the battery cells 100 in the ZX plane direction can be suppressed.

As shown in FIG. 2, the longitudinal direction of each battery cell 100 is substantially parallel to the X direction. The lateral direction of each battery cell 100 is substantially parallel to the Z direction. The thickness direction of each battery cell 100 is substantially parallel to the Y direction. The plurality of battery cells 100 is stacked in the Y direction. The shape of each battery cell 100 is not limited to this example.

Each battery cell 100 includes an unillustrated battery element, an exterior material 102, a positive electrode tab 104, and a negative electrode tab 106. The battery element includes a plurality of positive electrodes and a plurality of negative electrodes, not illustrated, alternately stacked in the Y direction, and an unillustrated separator located between the positive electrode and the negative electrode adjacent to each other in the Y direction. The exterior material 102 seals a battery element and an unillustrated electrolytic solution. The positive electrode tab 104 is electrically connected to the positive electrode of the battery element. The positive electrode tab 104 is drawn from one of the both sides of the exterior material 102 in the X direction. The negative electrode tab 106 is electrically connected to the negative electrode of the battery element. The negative electrode tab 106 is drawn from the other of the both sides of the exterior material 102 in the X direction. However, the structure of each battery cell 100 is not limited to this example.

In Embodiment 1, the plurality of cell groups 100G is connected in series from the cell group 100G positioned at one end in the Y direction to the cell group 100G positioned at the other end in the Y direction. Each cell group 100G includes a plurality of battery cells 100 connected in parallel. In Embodiment 1, each cell group 100G includes two battery cells 100 adjacent to each other in the Y direction. The two positive electrode tabs 104 drawn from the two battery cells 100 included in each cell group 100G face the same side in the X direction. The two negative electrode tabs 106 drawn from the two battery cells 100 included in each cell group 100G face the same side in the X direction. The positive electrode tab 104 and the negative electrode tab 106 drawn from one of the cell groups 100G adjacent to each other in the Y direction and the positive electrode tab 104 and the negative electrode tab 106 drawn from the other of the cell groups 100G adjacent to each other in the Y direction face opposite sides in the X direction. The two cell groups 100G adjacent to each other in the Y direction include a tab group 108 positioned in front of or behind the two cell groups 100G. The tab group 108 includes the positive electrode tab 104 and the negative electrode tab 106 bonded to each other. The positive electrode tab 104 and the negative electrode tab 106 included in the tab group 108 are bonded to each other by laser welding, for example. As a result, the plurality of tab groups 108 positioned in front of the cell stacked body 10 and the plurality of tab groups 108 positioned behind the cell stacked body 10 are alternately arranged.

**In** the Embodiment 1, the positive electrode tab 104 is drawn from the battery cell 100 positioned at the right end of the cell stacked body 10 toward the front side. Hereinafter, this positive electrode tab 104 is referred to as a terminal positive electrode tab 104T as necessary. The negative electrode tab 106 is drawn from the battery cell 100 positioned at the left end of the cell stacked body 10 toward the rear side. Hereinafter, this negative electrode tab 106 is referred to as a terminal negative electrode tab 106T as necessary.

The configuration of the cell stacked body 10 is not limited to the example described above. For example, each cell group 100G may include three or more battery cells 100 connected in parallel. Alternatively, a plurality of single battery cells 100 may be connected in series from the battery cell 100 positioned at one end in the Y direction to the battery cell 100 positioned at the other end in the Y direction. The positions where the terminal positive electrode tab 104T and the terminal negative electrode tab 106T are disposed are not limited to the examples described above. The positions of the terminal positive electrode tab 104T and the terminal negative electrode tab 106T change according to the number of cell groups 100G. For example, depending on the number of cell groups 100G, both the terminal positive electrode tab 104T and the terminal negative electrode tab 106T are disposed in front of or behind the cell stacked body 10.

The front voltage detection device 20A includes a front holding body 210A, a plurality of front voltage detection portions 220A, a plurality of front voltage detection lines 222A, a front connector 224A, and a positive electrode bus bar 230A.

The front holding body 210A is disposed in front of the cell stacked body 10. The front holding body 210A defines a plurality of front openings 212A. Each of the plurality of tab groups 108 positioned in front of the cell stacked body 10 is exposed forward through each of the plurality of front openings 212A. The front holding body 210A integrally holds a plurality of front voltage detection portions 220A and a plurality of front voltage detection lines 222A.

The plurality of front voltage detection portions 220A are attached to the front holding body 210A. Each of the plurality of front voltage detection portions 220A is joined to the front surface of each of the plurality of tab groups 108 positioned in front of the cell stacked body 10 by laser welding, for example. The plurality of front voltage detection portions 220A is electrically connected to a front connector 224A through a plurality of front voltage detection lines 222A. The plurality of front voltage detection lines 222A is routed through the front holding body 210A. In Embodiment 1, as the front holding body 210A is installed at an appropriate position with respect to the cell stacked body 10, each of the plurality of front voltage detection portions 220A can be disposed at an appropriate position with respect to each of the plurality of tab groups 108 positioned in front of the cell stacked body 10.

The positive electrode bus bar 230A is disposed at a right end portion of the front holding body 210A. The positive electrode bus bar 230A has a substantially L-shape. Specifically, the positive electrode bus bar 230A includes a front horizontal conductor 232A and a front vertical conductor 234A. The front horizontal conductor 232A extends substantially parallel to the Y direction. The front vertical conductor 234A extends downward substantially parallel to the Z direction from the right end portion of the front horizontal conductor 232A.

At least a portion of the front horizontal conductor 232A functions as an external terminal for electrically connecting to an external device such as another battery module. While a front cover 372A described below is removed, one end of an unillustrated connection terminal electrically connected to an external device is electrically connected to the front horizontal conductor 232A. Specifically, a fastening hole 232aA is provided at the left end portion of the front horizontal conductor 232A. A fastener, not illustrated, for fastening one end of the connection terminal can be installed in the fastening hole 232aA. As a result, the front horizontal conductor 232A and the external device can be electrically connected to each other through the connection terminal.

The front vertical conductor 234A is electrically connected to the terminal positive electrode tab 104T. The terminal positive electrode tab 104T is positioned on the right side of the front vertical conductor 234A. In Embodiment 1, the terminal positive electrode tab 104T and the front vertical conductor 234A are joined by laser welding. However, the method of joining the terminal positive electrode tab 104T and the front vertical conductor 234A is not limited to laser welding.

The rear voltage detection device 20A' is the same as the front voltage detection device 20A except for the following points. The rear voltage detection device 20A' includes a rear holding body 210A', a plurality of rear voltage detection portions 220A', a plurality of rear voltage detection lines 222A', a rear connector 224A', and a negative electrode bus bar 230A'.

The rear holding body 210A' is disposed behind the cell stacked body 10. The rear holding body 210A' defines a plurality of rear openings 212A'. Each of the plurality of tab groups 108 positioned behind the cell stacked body 10 is exposed rearward through each of the plurality of rear openings 212A'. The rear holding body 210A' integrally holds a plurality of rear voltage detection portions 220A' and a plurality of rear voltage detection lines 222A'.

The plurality of rear voltage detection portions 220A' is attached to the rear holding body 210A'. Each of the plurality of rear voltage detection portions 220A' is joined to the rear surface of each of the plurality of tab groups 108 positioned behind the cell stacked body 10 by laser welding, for example. The plurality of rear voltage detection portions 220A' is electrically connected to the rear connector 224A' through a plurality of rear voltage detection lines 222A'. The plurality of rear voltage detection lines 222A' is routed through the rear holding body 210A'. In Embodiment 1, as the rear holding body 210A' is installed at an appropriate position with respect to the cell stacked body 10, each of the plurality of rear voltage detection portions 220A' can be disposed at an appropriate position with respect to each of the plurality of tab groups 108 positioned behind the cell stacked body 10.

The negative electrode bus bar 230A' is disposed at the left end portion of the rear holding body 210A'. The negative electrode bus bar 230A' has a substantially L-shape. The negative electrode bus bar 230A' includes a rear horizontal conductor 232A' and a rear vertical conductor 234A'. The rear horizontal conductor 232A' extends substantially parallel to the Y direction. The rear vertical conductor 234A' extends downward substantially parallel to the Z direction from the left end portion of the rear horizontal conductor 232A'.

At least a portion of the rear horizontal conductor 232A' functions as an external terminal for electrical connection to an external device such as another battery module, in the same manner as the front horizontal conductor 232A. As in the front horizontal conductor 232A, while a rear cover 374A described below is removed, one end of a connection terminal, not illustrated, electrically connected to an external device is electrically connected to the rear horizontal conductor 232A'.

The rear vertical conductor 234A' is electrically connected to the terminal negative electrode tab 106T. The terminal negative electrode tab 106T is positioned on the left side of the rear vertical conductor 234A'. In Embodiment 1, the terminal negative electrode tab 106T and the rear vertical conductor 234A' are joined by laser welding. However, the method of joining the terminal negative electrode tab 106T and the rear vertical conductor 234A' is not limited to laser welding.

The housing body 30A has a front plate 310A, a rear plate 320A, a right plate 330A, a left plate 340A, a lower plate 350A, and an upper plate 360A.

The front plate 310A covers the cell stacked body 10 and the front voltage detection device 20A from the front. The front plate 310A is made of an insulating material such as a resin.

The rear plate 320A covers the cell stacked body 10 and the rear voltage detection device 20A' from the rear. The rear plate 320A is made of an insulating material such as a resin.

The right plate 330A covers the cell stacked body 10, the front voltage detection device 20A, and the rear voltage detection device 20A' from the right side. The right plate 330A is made of a conductive material such as metal.

The left plate 340A covers the cell stacked body 10, the front voltage detection device 20A, and the rear voltage detection device 20A' from the left side. The left plate 340A is made of a conductive material such as metal.

The lower plate 350A covers the cell stacked body 10, the front voltage detection device 20A, and the rear voltage detection device 20A' from below. The lower plate 350A is made of a conductive material such as metal. A thermally conductive adhesive 352 is disposed between the upper surface of the lower plate 350A and the lower end of the cell stacked body 10. For this reason, the heat generated from the cell stacked body 10 can be dissipated downward of the battery module 1A through the thermally conductive adhesive 352.

The upper plate 360A covers the cell stacked body 10, the front voltage detection device 20A, and the rear voltage detection device 20A' from above. The upper plate 360A is made of a conductive material such as metal.

The front end portion of the upper plate 360A is bent in a substantially L shape as viewed from the Y direction. The front end portion of the upper plate 360A defines a first front notch 362A and a second front notch 364A. The first front notch 362A exposes at least a portion of the front horizontal conductor 232A. Specifically, the first front notch 362A exposes the left end portion of the front horizontal conductor 232A. The upper portion of the left end portion of the front horizontal conductor 232A is covered with the front cover 372A. The front cover 372A is rotatable around a rotation axis that passes substantially parallel to the right end portion of the front cover 372A in the X direction. Accordingly, the upper portion of the left end portion of the front horizontal conductor 232A can be exposed from the front cover 372A by rotating the front cover 372A counterclockwise around the rotation axis as viewed from the front. In the embodiment, the front connector 224A is drawn through the second front notch 364A.

The rear end portion of the upper plate 360A is bent in a substantially L-shape as in the front end portion of the upper plate 360A, as viewed in the Y direction. The rear end portion of the upper plate 360A defines a first rear notch 366A and a second rear notch 368A. The first rear notch 366A exposes at least a portion of the rear horizontal conductor 232A'. Specifically, the first rear notch 366A exposes the right end portion of the rear horizontal conductor 232A'. The upper portion of the right end portion of the rear horizontal conductor 232A' is covered with the rear cover 374A. The upper portion of the right end portion of the rear horizontal conductor 232A' can be exposed from the rear cover 374A by the same method as the method of the front cover 372A. The rear connector 224A' is drawn through the second rear notch 368A.

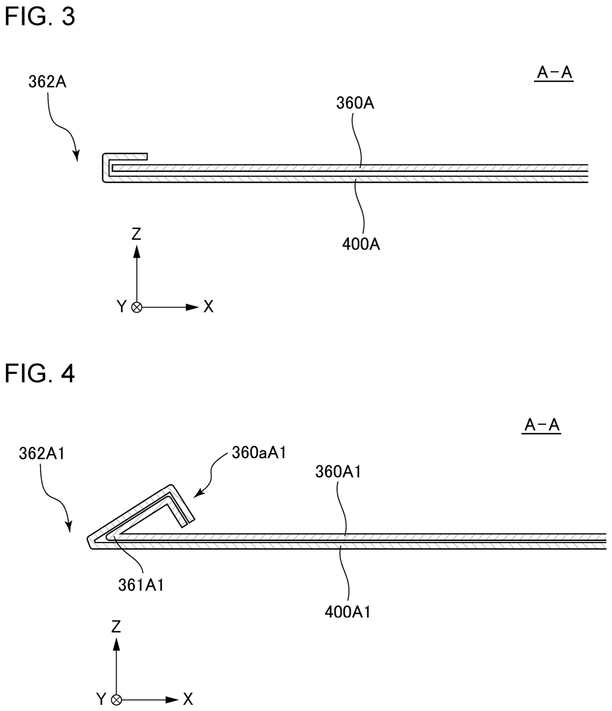

FIG. 3 is a schematic cross-sectional view taken along line A-A of FIG. 1. In FIG. 3, for simplicity of description, the front cover 372A is not shown. In FIG. 3, the white circle with X indicating the Y direction indicates that a direction from the base end to the tip end of the arrow indicating the Y direction is a direction from the front to the back of the paper surface.

An insulator 400A is provided on the lower surface of the upper plate 360A except for a region overlapping the right plate 330A and the left plate 340A in the Z direction. The insulator 400A is, for example, an insulating sheet attached to the lower surface of the upper plate 360A. The upper plate 360A and the battery cell 100 can be electrically insulated from each other by the insulator 400A. The insulator 400A is not provided in a region overlapping the right plate 330A and the left plate 340A in the Z direction. As a result, the insulator 400A can be prevented from affecting the joining such as welding of the right end portion of the upper plate 360A and the upper end portion of the right plate 330A, and the joining such as welding of the left end portion of the upper plate 360A and the upper end portion of the left plate 340A.

In the example shown in FIG. 3, the insulator 400A covers a front edge of the upper plate 360A defining the first front notch 362A. Specifically, the insulator 400A is folded from the lower surface to the upper surface of the upper plate 360A at the front edge of the upper plate 360A. As a result, the insulator 400A covers at least a portion of the upper plate 360A around the left end portion of the front horizontal conductor 232A. Accordingly, the electrical insulation between the upper plate 360A and the connection terminal electrically connected to the positive electrode bus bar 230A can be ensured.

In one example, the insulator 400A is pasted to the lower surface of the upper plate 360A after the first front notch 362A is formed in the upper plate 360A. In this example, the insulator 400A has an excess-length portion drawn frontward from the first front notch 362A. This excess-length portion of the insulator 400A is folded toward the upper surface of the upper plate 360A. As a result, the insulator 400A covers the front edge of the upper plate 360A defining the first front notch 362A. However, the method of providing the insulator 400A on the upper plate 360A is not limited to this example.

In the example shown in FIG. 3, the electrical insulation between the upper plate 360A and the connection terminal electrically connected to the positive electrode bus bar 230A is ensured by the insulator 400A. However, the electrical insulation between the upper plate 360A and the connection terminal electrically connected to the negative electrode bus bar 230A' can be ensured by the insulator 400A with the same method as the method described with reference to FIG. 3.

In Embodiment 1, the insulator 400A ensures electrical insulation between the upper plate 360A and the connection terminal electrically connected to the positive electrode bus bar 230A or the negative electrode bus bar 230A'. However, a predetermined insulator may ensure electrical insulation between the conductive portion of the housing body 30A different from the upper plate 360A and the connection terminal that is electrically connected to a predetermined external terminal electrically connected to the cell stacked body 10. That is, the insulator can cover at least a portion of the housing body 30A at least in part around the predetermined external terminal.

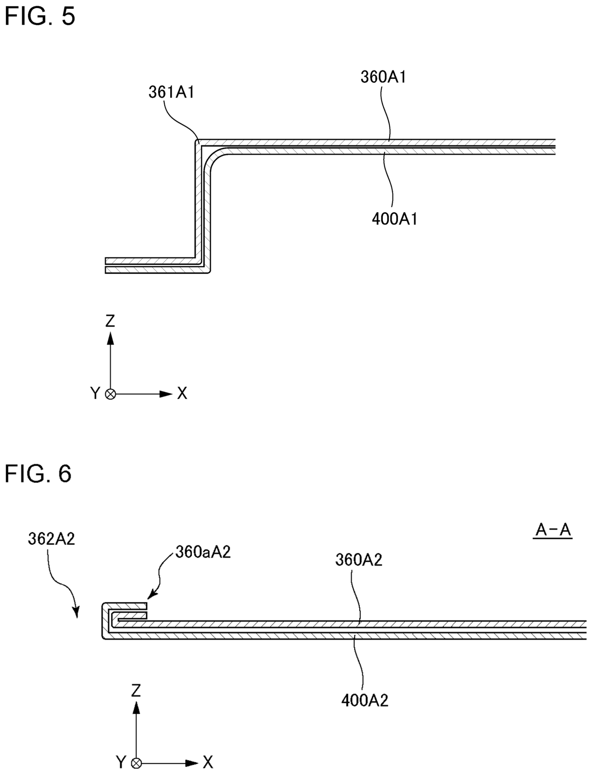

FIG. 4 is a diagram showing a first variant of FIG. 3. FIG. 5 is a cross-sectional view of the upper plate 360A1 and the insulator 400A1 at portions of the front end portion of the upper plate 360A1 and the front end portion of the insulator 400A1 not folded. FIG. 5 illustrates a cross section at a position displaced in a direction substantially parallel to the Y direction with respect to the cross section shown in FIG. 4.

In the example shown in FIG. 4, the front end portion of the upper plate 360A1 includes the folded portion 360aA1. The folded portion 360aA1 defines the first front notch 362A1. Specifically, as viewed from the left side, the folded portion 360aA1 is folded counterclockwise toward the rear together with the insulator 400A1 about a corner portion 361A1 of the upper plate 360A1. As a result, the first front notch 362A1 is defined in front of the folded portion 360aA1. In the example shown in FIG. 4, the folded portion 360aA2 is formed while the substantially L-shaped folded shape of the front end portion of the upper plate 360A is maintained. In the example shown in FIG. 4, the insulator 400A1 also covers at least a portion of the upper plate 360A1 at least in part around the left end portion of the front horizontal conductor 232A. Accordingly, electrical insulation between the upper plate 360A1 and the connection terminal electrically connected to the positive electrode bus bar 230A can be ensured.

In one example, the folded portion 360aA1 is folded together with the insulator 400A1 after the insulator 400A1 is provided on the lower surface of the upper plate 360A1. In this example, a clearance may be provided between the substantially right-angled inner surface of the corner portion 361A1 of the upper plate 360A1 and the outer surface of the insulator 400A1 before the folded portion 360aA1 is formed in the same manner as in the example shown in FIG. 5, for example. In this case, even if the front end portion of the upper plate 360A1 and the front end portion of the insulator 400A1 are rotated counterclockwise about the corner portion 361A1 as viewed from the left side, the insulator 400A1 around the corner portion 361A1 can be not to completely follow the folded shape around the corner portion 361A1 of the upper plate 360A1. As a result, the occurrence of an abnormality such as a minute crack of the insulator 400A1 can be suppressed that may occur due to the insulator 400A1 around the corner portion 361A1 following the folded shape of the corner portion 361A1 of the upper plate 360A1. As shown in FIG. 5, the clearance may remain in a portion where the front end portion of the upper plate 360A1 and the front end portion of the insulator 400A1 are not folded. However, the insulator 400A1 may be provided from the lower surface of the upper plate 360A1 to the upper surface of the folded portion 360aA1 after the folded portion 360aA1 is folded.

FIG. 6 is a diagram showing a second variant of FIG. 3.

In the example shown in FIG. 6, the front end portion of the upper plate 360A2 includes the folded portion 360aA2. The folded portion 360aA2 defines a first front notch 362A2. Specifically, the folded portion 360aA2 is folded toward the rear together with the insulator 400A2. Accordingly, the first front notch 362A2 is defined in front of the folded portion 360aA2. In the example shown in FIG. 6, the upper plate 360A2 and the insulator 400A2 are substantially folded by 180° at the folded portion 360aA2. In the example shown in FIG. 6, the insulator 400A2 also covers at least a portion of the upper plate 360A2 at least in part around the left end portion of the front horizontal conductor 232A. Accordingly, the electrical insulation between the upper plate 360A2 and the connection terminal electrically connected to the positive electrode bus bar 230A can be ensured.

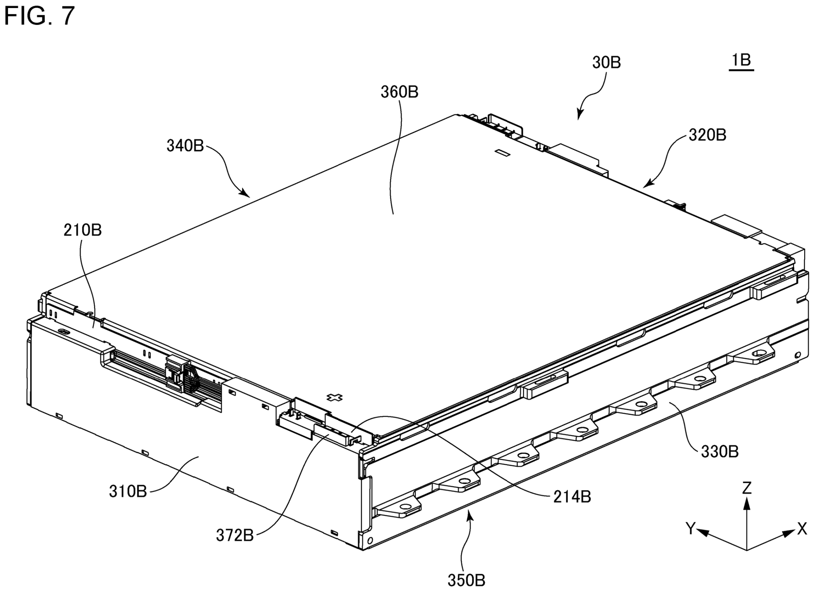

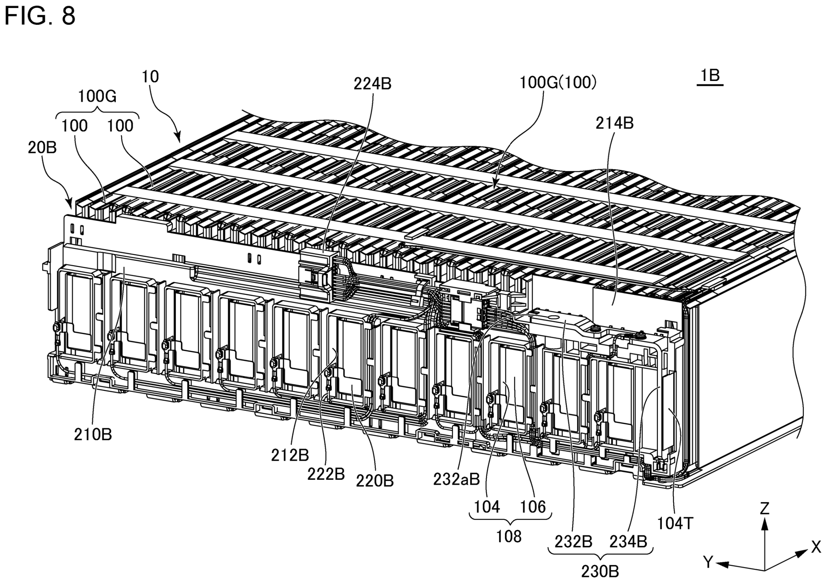

FIG. 7 is a perspective view of a battery module 1B according to Embodiment 2. FIG. 8 is an enlarged perspective view of a front portion of the battery module 1B according to Embodiment 2 with the housing body 30B removed. The battery module 1B according to Embodiment 2 is the same as the battery module 1A according to Embodiment 1 except for the following points.

The battery module 1B according to Embodiment 2 includes a cell stacked body 10, a front voltage detection device 20B, a rear voltage detection device, not illustrated, and a housing body 30B, in the same way as the battery module 1A according to Embodiment 1.

As shown in FIG. 8, the front voltage detection device 20B according to Embodiment 2 has a front holding body 210B, a plurality of front voltage detection portions 220B, a plurality of front voltage detection lines 222B, a front connector 224B, and a positive electrode bus bar 230B in the same way as the front voltage detection device 20A according to Embodiment 1. The front holding body 210B according to Embodiment 2 defines a plurality of front openings 212B in the same way as the front holding body 210A according to Embodiment 1. The positive electrode bus bar 230B according to Embodiment 2 includes the front horizontal conductor 232B and the front vertical conductor 234B in the same way as the positive electrode bus bar 230A according to Embodiment 1. The front horizontal conductor 232B according to Embodiment 2 is provided with a fastening hole 232aB as in the front horizontal conductor 232A according to Embodiment 1. In the example shown in FIG. 7, while the front voltage detection device 20B is housed in the housing body 30B, a terminal electrically connected to the left end portion of the front horizontal conductor 232B is exposed from the front cover 372B. The rear voltage detection device according to Embodiment 2 has the same configuration as the front voltage detection device 20B except for a part of the configuration, as in the rear voltage detection device 20A' according to Embodiment 1.

As shown in FIG. 7, the housing body 30B according to Embodiment 2 includes a front plate 310B, a rear plate 320B, a right plate 330B, a left plate 340B, a lower plate 350B, and an upper plate 360B in the same way as the housing body 30A according to Embodiment 1.

As shown in FIGS. 7 and 8, the right end portion of the front holding body 210B according to Embodiment 2 includes a partition wall insulator 214B. The partition wall insulator 214B separates the rear end portion of the front horizontal conductor 232B and the front end portion of the upper plate 360B from each other. As a result, the electrical insulation between the upper plate 360B and the connection terminal that is electrically connected to the front horizontal conductor 232B can be ensured.

As shown in FIGS. 7 and 8, the upper end portion of the partition wall insulator 214B protrudes upward from between the rear end portion of the front horizontal conductor 232B and the front end portion of the upper plate 360B. That is, the position of the upper end of the partition wall insulator 214B in the Z direction is positioned above both the position of the front end of the upper surface of the front horizontal conductor 232B in the Z direction and the position of the upper surface of the upper plate 360B in the Z direction. Accordingly, the partition wall insulator 214B can more easily separate the rear end portion of the front horizontal conductor 232B and the front end portion of the upper plate 360B from each other, as compared with the case where the position of the upper end of the partition wall insulator 214B in the Z direction is positioned downward in the Z direction from the position of the upper surface of the front horizontal conductor 232B in the Z direction or the position of the front end of the upper surface of the upper plate 360B in the Z direction.

In Embodiment 2, the partition wall insulator 214B is at least a portion of the front holding body 210B. As a result, the number of components of the battery module 1B can be reduced as compared with the case where the partition wall insulator 214B is provided separately from the front holding body 210B.

Although the embodiments and variants of the present invention have been described above with reference to the accompanying drawings, these are merely examples of the present invention, and various other configurations may be employed.

This application claims priority based on Japanese Patent Application No. 2023-004951 filed on January 17, 2023, the disclosure of which is incorporated herein in its entirety by reference.

### REFERENCE SIGNS LIST

1A, 1B battery module, 10 cell stacked body, 20A, 20B front voltage detection device, 20A' rear voltage detection device, 30A, 30B housing body, 100 battery cell, 100G cell group, 102 exterior material, 104 positive electrode tab, 104T terminal positive electrode tab, 106 negative electrode tab, 106T terminal negative electrode tab, 108 tab group, 110 compression pad, 210A, 210B front holding body, 210A' rear holding body, 212A, 212B front opening, 212A' rear opening, 214B partition wall insulator, 220A, 220B front voltage detection portion, 220A' rear voltage detection portion, 222A, 222B front voltage detection line, 222A' rear voltage detection line, 224A, 224B front connector, 224A' rear connector, 230A, 230B positive electrode bus bar, 230A' negative electrode bus bar, 232A, 232B front horizontal conductor, 232A' rear horizontal conductor, 232aA, 232aB fastening hole, 234A, 234B front vertical conductor, 234A' rear vertical conductor, 310A, 310B front plate, 320A, 320B rear plate, 330A, 330B right plate, 340A, 340B left plate, 350A, 350B lower plate, 352 thermally conductive adhesive, 360A, 360A1, 360A2, 360B upper plate, 360aA1, 360aA2 folded portion, 361A corner portion, 362A, 362A1, 362A2 first front notch, 364A second front notch, 366A first rear notch, 368A second rear notch, 372A, 372B front cover, 374A rear cover, 400A, 400A1, 400A2 insulator

## Claims

1. A battery module comprising:
a battery cell;
an external terminal electrically connected to the battery cell;
a housing body exposing at least a portion of the external terminal and housing the battery cell; and
an insulator covering at least a portion of the housing body around the at least a portion of the external terminal.

2. The battery module according to claim 1,
wherein the insulator covers at least a portion of an edge of the housing body around the at least a portion of the external terminal.

3. The battery module according to claim 1,
wherein the housing body includes a folded portion folded together with the insulator around the at least a portion of the external terminal.

4. A battery module comprising:
a battery cell;
an external terminal electrically connected to the battery cell;
a housing body housing the battery cell; and
an insulator separating the external terminal and the housing body from each other.

5. The battery module according to claim 4,
wherein the insulator protrudes from between the external terminal and the housing body.

6. The battery module according to claim 4 or 5, further comprising:
a voltage detection portion electrically connected to the battery cell; and
a holding body holding the voltage detection portion,
wherein the insulator is at least a portion of the holding body.
